# EUROPÄISCHE PATENTSCHRIFT

(11) **EP 0 929 396 B1**
(45) Veröffentlichungstag und Bekanntmachung des Hinweises auf die Patenterteilung: **05.07.2000**
(21) Anmeldenummer: 97909292.1
(22) Anmeldetag: 18.09.1997
(51) Int. Cl.: B30B 15/14, B30B 1/26

(54) **VERFAHREN ZUR STEUERUNG EINER STÖSSELGESCHWINDIGKEIT EINES PRESSENSTÖSSELS EINER UMFORMPRESSE UND ANTRIEBSVORRICHTUNG FÜR EINEN PRESSENSTÖSSEL**
METHOD OF CONTROLLING THE RAM SPEED OF A PRESS RAM IN A SHAPING PRESS AND DRIVE DEVICE FOR A PRESS RAM
PROCEDE DE CONTROLE DE LA VITESSE D'UN COULISSEAU DE PRESSE DANS UNE PRESSE DE FORMAGE, ET DISPOSITIF DE COMMANDE DE CE COULISSEAU

(30) Priorität: 30.09.1996 DE 19640440
(43) Veröffentlichungstag der Anmeldung: 21.07.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: ULLRICH, Jens, D-01127 Dresden (DE); MORGENSTERN, Karlheinz, D-09116 Chemnitz (DE)
(74) Vertreter: Grünecker, Kinkeldey, Stockmair & Schwanhäusser Anwaltssozietät
(86) Internationale Anmeldenummer: EP9705132
(87) Internationale Veröffentlichungsnummer: WO9814321

(56) Entgegenhaltungen:
- EP-A- 0 116 024
- EP-A- 0 561 604
- DE-A- 4 004 290
- DE-C- 629 792
- GB-A- 2 258 186

## Beschreibung

Die Erfindung betrifft ein Verfahren zur Steuerung einer Stößelgeschwindigkeit eines Pressenstößels einer Umformpresse, wobei eine erste Antriebsenergie aus einem Hauptantrieb eine zweite Antriebsenergie aus einem Zusatzantrieb überlagert und der Pressenstößel mit einer resultierenden Geschwindigkeit angesteuert wird. Die Erfindung betrifft ferner eine Antriebsvorrichtung für einen Pressenstößel einer Umformpresse.

Für die Bestimmung einer Antriebscharakteristik (Geschwindigkeitsprofil) des Pressenstößels einer Umformpresse während eines aus Energieeinspeisung (Beschleunigung des Pressenstößels, Beharrung, Energierückgewinnung und Umformphase) bestehenden Gesamtzyklus (ein Hub) des Pressenstößels sind im Stand der Technik eine Vielzahl von Lösungen bekannt.

So ist es z.B. bekannt, einen Pressenantrieb mit zwei Schwungrädern und zugehörigen Kupplungen auszurüsten und durch wechselseitiges Schalten der Kupplungen ein gewünschtes Geschwindigkeitsprofil des Pressenstößels einzustellen. Derartige Antriebe sind jedoch verhältnismäßig aufwendig und energetisch unwirtschaftlich.

Es ist ferner bekannt, für Pressenantriebe von Umformpressen einstufige Planetenrad-Schaltgetriebe einzusetzen, bei denen über Kupplungs-/Bremsen-Kombinationen zwei unterschiedliche Getriebe-Abtriebsdrehzahlen eingerichtet werden.

Für eine Verzögerung bzw. Abbremsung des Pressenstößels (negative Beschleunigung) wird dabei die beim Schalten auf die niedrigere Drehzahl aus dem Antrieb herauszuführende Energie als Verlustenergie zumeist gegen das Maschinengestell abgegeben und in nicht weiter nutzbare Reibungsenergie (Wärme) umgewandelt.

Aus der DE 40 04 290 ist es bekannt, zu einem Hauptantrieb einen Zusatzantrieb zu überlagern, um beliebigie Geschwindigkeitsprofile für den Pressenstößel zu realisieren. Die hierbei für die Einleitung der Zusatzenergie zu überwindenden Massenträgheitsmomente sind jedoch beträchtlich.

Der Erfindung liegt daher die Aufgabe zugrunde, ein Verfahren zur Steuerung einer Stößelgeschwindigkeit eines Pressenstößels einer Umformpresse der eingangs genannten Art sowie eine Antriebsvorrichtung für einen Pressenstößel einer Umformpresse, insbesondere zur Durchführung des Verfahrens, anzugeben, die es gestatten, während eines Hubes des Pressenstößels nicht nur das Geschwindigkeitsprofil desselben mit hoher Variabilität einstellbar zu gestalten, sondern darüber hinaus eine hinsichtlich der Energiebilanz deutlich verbesserte Einstellung der Geschwindigkeitscharakteristik des Pressenstößels zu ermöglichen.

Diese Aufgabe wird bei einem Verfahren der eingangs genannten Art erfindungsgemäß dadurch gelöst, daß für eine positive Beschleunigung des Pressenstößels die zweite Antriebsenergie einem Energiespeicher entnommen und für eine negative Beschleunigung des Pressenstößels Energie in den Energiespeicher rückgespeist wird.

Vorzugsweise können die Zeitpunkte für Beginn und Ende von positiver und negativer Beschleunigung des Pressenstößels über einen Kurbelwinkel eines Antriebes des Pressenstößels frei gewählt werden, so daß die Geschwindigkeit des Pressenstößels während seiner Bewegungsphasen mit Hilfe des Zusatzantriebes im Bereich beliebiger positiver und negativer Drehwinkel einer den Pressenstößel antreibenden Kurbelwelle einschließlich der Möglichkeit eines Stillstandes des Pressenstößels und einer Umkehrung der Arbeitsbewegung variabel ist. Durch das erfindungsgemäße Verfahren wird während einer Verzögerungsphase des Hubes die in Verbindung mit der erforderlichen Drehzahlverringerung notwendig freiwerdende Energie nicht als Verlustenergie abgegeben, sondern als in Energiespeichern für den zukünftigen Prozeß wieder nutzbare und in den Pressenantrieb rückführbare Energie gespeichert.

Ein solches Verfahren führt nicht nur zu einer Flexibilisierung der Steuerung für die Hauptbewegung weggebundener Umformmaschinen, sondern es läßt sich hierdurch auch in vorteilhafter Weise die gewünschte Aufsetzgeschwindigkeit des Pressenstößels am Beginn des Umformvorganges bei optimiertem Energieeinsatz erreichen. Zugleich ist es möglich, die Geschwindigkeitscharakteristik des Pressenantriebes dem günstigsten Geschwindigkeitsprofil der zugehörigen Handhabungseinrichtungen zur Bedienung einer Umformpresse anzupassen.

Die vorgenannte Aufgabe wird hinsichtlich der Antriebsvorrichtung für einen Pressenstößel einer Umformpresse mit einem Hauptantrieb und einem Zusatzantrieb zur Variation einer Geschwindigkeitscharakteristik des Pressenstößels in Abhängigkeit vom Kurbelwinkel des Hauptantriebes erfindungsgemäß dadurch gelöst, daß der Zusatzantrieb zwischen dem Hauptantrieb und einem Energiespeicher angeordnet ist.

Vorzugsweise ist der Hauptantrieb als motorgesteuerter Schwungrad-Antrieb mit einem Differentialgetriebe ausgelegt, das vorzugsweise als Planetenradgetriebe ausgebildet ist, und kann die über eine Prozeßsteuerung an den Zusatzantrieb rückführbare Energie insbesondere aus einem Energieversorgungssystem als Energiespeicher oder aus diskretem Energiespeicher, wie z.B. einem magnetisch-dynamischen Speicher oder einem Hydrospeicher, entnommen werden.

Bevorzugte Ausgestaltungen des Erfindungsgegenstandes sind in den übrigen Unteransprüchen dargelegt.

Die Erfindung wird nachstehend anhand eines Ausführungsbeispieles und zugehöriger Zeichnungen näher erläutert. In diesen zeigen:
- Fig. 1: eine Antriebsvorrichtung für eine Umformpresse in schematischer Blockdarstellung, und
- Fig. 2: ein Bewegungsdiagramm für einen Pressenstößel einer Umformpresse mit einer Antriebsvorrichtung nach Fig. 1, wobei eine Kurbelwellendrehzahl eines Antriebes des Pressenstößels in Abhängigkeit vom Kurbelwinkel dieses Antriebes dargestellt ist.

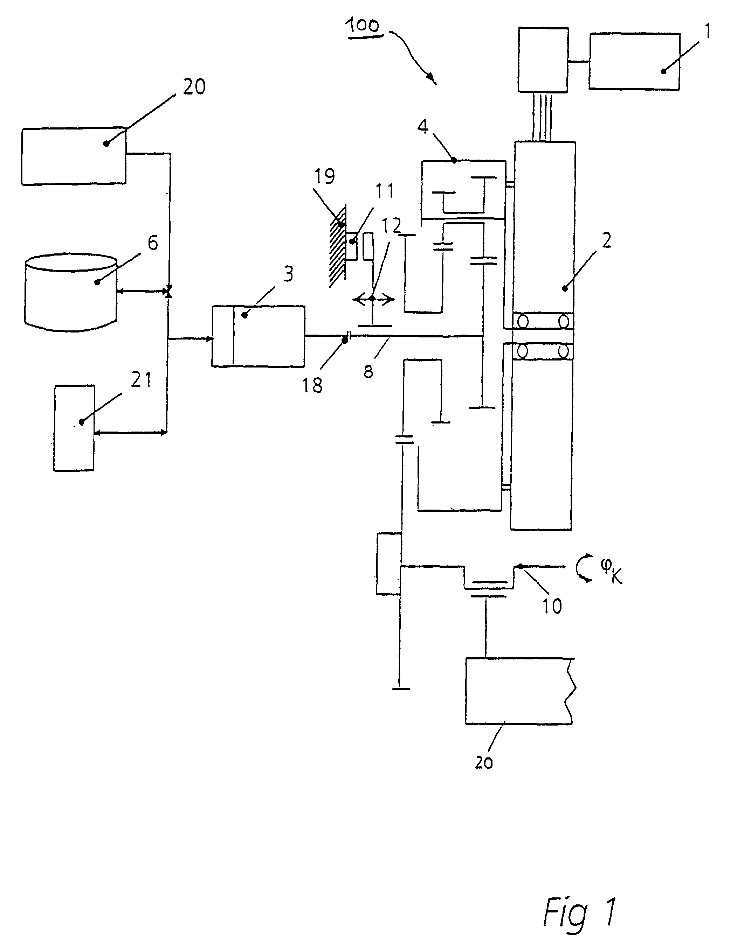

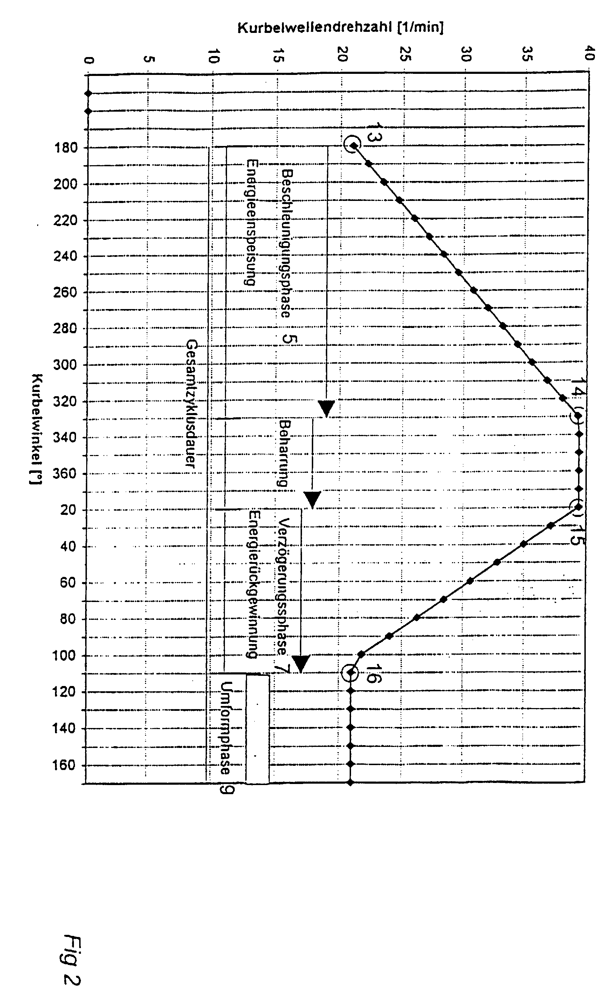

Ein schematisches Blockschaltbild eines Pressenantriebes für eine hier nicht näher dargestellte, weggebundene Umformpresse, wie sie z.B. zum Ziehen, Schneiden, Prägen o.dgl. Umformbearbeitungen verwendet wird, ist in Fig. 1 dargestellt. In herkömmlicher Weise erfolgt der Antrieb eines Pressenstößels 20 dieser Umformpresse über eine Kurbel von einer Kurbelwelle 10, wobei (wie in Fig. 2 gezeigt) eine Geschwindigkeitscharakteristik des Pressenstößels 20 durch Variation der Drehzahl der Kurbelwelle 10 für unterschiedliche Kurbelwinkel ϕ_{K} vermöge eines Hauptantriebes 100 und eines Zusatzantriebes 3 steuerbar ist. Im Hauptantrieb 100 steuert ein Motor 1 über ein Getriebe ein Schwungrad 2 an, das seine Energie (erste oder Hauptantriebsenergie) an ein Planetenradgetriebe 4 vermittelt, das als Differentialgetriebe abtriebsseitig die Kurbelwelle 10 des Pressenstößels 20 antreibt. Zur Beschleunigung und Abbremsung des Pressenstößels 20 während eines Hubes ist der Hauptantrieb 100 mit einem Zusatzantrieb 3 beschaltet, der einerseits über eine Koppelstelle 18 mit einer Sonnenradachse 8 des Planetenradgetriebes 4 verbunden ist und andererseits über eine Prozeßsteuerung 21 mit einem oder einer Mehrzahl von Energiespeichern, wie z.B. einem diskreten magnetisch-dynamischen Energiespeicher oder als Hydrospeicher ausgelegten Energiespeicher 6 und/oder einem als Energiespeicher wirksamen Energieversorgungssystem 20.

Fig. 2 zeigt als Diagramm die Drehzahl der Kurbelwelle 10 in Abhängigkeit vom Kurbelwinkel ϕ_{K} für den Antrieb des Pressenstößels 20. Ein Hub des Pressenstößels 20 für einen Umformvorgang (in Fig. 2 als Gesamtzyklusdauer bezeichnet) umfaßt eine Beschleunigungsphase 5 für den Pressenstößel 20, um diesen in seine obere Endstellung zu bringen, wobei diese Phase als Totzeit möglichst kurz sein soll und unter Energiezufuhr über einen Kurbelwinkel ϕ_{K} von 200° bis 330° stattfindet und in Fig. 2 durch die Punkte 13 und 14 definiert wird. An diese Beschleunigungsphase 5 schließt sich eine Beharrungsphase zwischen den Punkten 14 und 15 über einen Kurbelwinkel von 330° bis 20° an, gefolgt von einer durch Abbremsung unter Energierückgewinnung gekennzeichnete Verzögerungsphase 7 der Pressenstößelbewegung zwischen den Punkten 15 und 16 (Kurbelwinkel ϕ_{K} zwischen 20° und 110°) in Fig. 2, gefolgt von der Umformphase 9 (ab Punkt 16 in Fig. 2) über einen Kurbelwinkel ϕ_{K} von 110° bis 180°.

Die für die Beschleunigungsphase 5 erforderliche Energieeinspeisung in den Hauptantrieb 100 erfolgt durch den Zusatzantrieb 3 auf den Eingang des Planetenradgetriebes 4 durch Energiezufuhr aus dem z.B. als magnetisch-dynamischer Speicher oder als Hydrospeicher ausgeführten Energiespeicher 6 und/oder auch direkt aus einem als Energiespeicher wirksamen Energieversorgungssystem 20.

Die z.B. aus dem Netz (Energieversorgungssystem 20) als Energiespeicher zugeführte Energie beaufschlagt für die Beschleunigungsphase 5 des Pressenstößels den vorzugsweise als Elektromotor 3 ausgebildeten Zusatzantrieb, der z.B. über einen Transistorsteller oder auch über ein mechanisches Stellgetriebe geregelt sein kann. Der Zusatzantrieb 3 ist dabei so ausgelegt, daß er für die hohe Bewegungsgeschwindigkeiten des Pressenstößels 20 erfordernden Bewegungsphasen (zwischen den Punkten 13 und 16 in Fig. 2) hinsichtlich des zu übertragenden Momentes eine wesentlich kleinere Dimensionierung aufweist als dies im Hinblick auf eine die Umformphase berücksichtigende Dimensionierung der Fall wäre.

Die Gestaltung des Planetenradgetriebes 4 ist derart getroffen, daß, bezogen auf Zusatzantriebswelle 8 (Sonnenradwelle) das Planetenradgetriebe 4 das kleinstmögliche Massenträgheitsmoment aufweist, so daß auch hinsichtlich eines Absolutbetrages die Energieaufnahme des Planetenradgetriebes 4 einen Kleinstwert besitzt.

Die während der Abbremsung der Stößelbewegung (Verzögerungsphase 7 in Fig. 2) für die Verringerung der Drehzahl der Kurbelwelle 10 erforderliche Energieabfuhr erfolgt nicht als Verlustenergie, sondern diese Energie wird über den Elektromotor 3 an den oder die Energiespeicher, z.B. das Netz 20 oder den als magnetisch-dynamischer Speicher oder als Hydrospeicher ausgelegten Energiespeicher 6 zurückgeführt und steht für eine nächste Beschleunigungsphase 5 des Pressenstößels 20 zur Einspeisung in das Planetenradgetriebe 4 erneut zur Verfügung.

Um für die Umformphase 9 ein hohes Moment an der Kurbelwelle 10 zu gewährleisten, ist am Eingang des Planetenradgetriebes 4 stromab der Koppelstelle 18 zu dem Elektromotor-Zusatzantrieb 3 eine Haltebremse 11 vorgesehen, für die lediglich eine Schaltenergie zum Einkoppeln zugehöriger Bremselemente 12 erforderlich ist, ohne daß die Haltebremse 11 im übrigen äußere Energie aus dem Hauptantrieb 100 oder anderen äußeren Energiequellen aufnimmt.

Für die Umformphase 9 selbst erfolgt die Abgabe der zusätzlich zur Umformenergie freiwerdenden Energie in herkömmlicher Weise über den Hauptantrieb 100 (Motor 1/Schwungrad 2), der festen Übersetzung des Planetenradgetriebes 4 und dem in der Umformphase 9 durch die Haltebremse 11 festgehaltenen Koppelstelle 18 des Zusatzantriebes 3 gegen das Gestell 19.

Die Zeitpunkte für den Beginn der Phase positiver Beschleunigung 13 und das Ende dieser positiven Beschleunigungsphase (Punkt 14 in Fig. 2) sowie der Beginn der Phase negativer Beschleunigung (Verzögerung, Punkt 15 in Fig. 2) sowie das Ende dieser Phase bei 16 in Fig. 2 sind beliebig über den Kurbelwinkel ϕ_{K} steuerbar, wobei die Stößelgeschwindigkeit während der Bewegungsphasen (zwischen 13 und 16 in Fig. 2) über den Zusatzantrieb 3 im Bereich beliebiger positiver und negativer Kurbelwinkel variabel ist, wobei auch die Möglichkeiten eines Stößelstillstandes und einer Umkehrung der Arbeitsbewegung des Pressenstößels 20 eingeschlossen sind.

Der Zweitantrieb kann anstelle einer Ausgestaltung als Elektromotor auch als hydrostatischer Antrieb, z. B. in Form einer Hydromotor-/Pumpen-Kombination ausgelegt sein.

Nach dem vorliegenden Ausführungsbeispiel kann ein wesentlich flexibleres und vor allem hinsichtlich seiner Energiebilanz deutlich verbessertes Verfahren zur Steuerung der Pressenstößelgeschwindigkeit einer Umformpresse bei verschleißarmer Auslegung der aktiven Elemente des Pressenantriebes erfolgen.

## Patentansprüche

1. Verfahren zur Steuerung einer Stößelgeschwindigkeit eines Pressenstößels einer Umformpresse, wobei einer ersten Antriebsenergie aus einem Hauptantrieb (100) eine zweite Antriebsenergie aus einem Zusatzantrieb (3) überlagert und der Pressenstößel (20) mit einer resultierenden Geschwindigkeit angetrieben wird, dadurch gekennzeichnet, daß für eine positive Beschleunigung des Pressenstößels (20) die zweite Antriebsenergie einem Energiespeicher (6, 20) entnommen und für eine negative Beschleunigung des Pressenstößels (20) Energie in den Energiespeicher (6, 20) rückgespeist wird.

2. Verfahren nach Anspruch 1, dadurch gekennzeichnet, daß Zeitpunkte für Beginn und Ende von positiver und negativer Beschleunigung des Pressenstößels (20) über einen Kurbelwinkel (ϕK) eines Antriebes des Pressenstößels (20) frei gewählt werden.

3. Antriebsvorrichtung für einen Pressenstößel einer Umformpresse mit einem Hauptantrieb (100) und einem Zusatzantrieb (3) zur Variation einer Geschwindigkeitscharakteristik des Pressenstößels (20) in Abhängigkeit von einem Kurbelwinkel (ϕK) des Hauptantriebes (100), insbesondere zur Durchführung des Verfahrens nach Anspruch 1, dadurch gekennzeichnet, daß der Zusatzantrieb (3) zwischen dem Hauptantrieb (100) und einem Energiespeicher (6, 20) angeordnet ist.

4. Antriebsvorrichtung nach Anspruch 3, dadurch gekennzeichnet, daß der Hauptantrieb (100) ein durch einen Motor (1) angetriebenes Schwungrad (2) in Verbindung mit einem Differentialgetriebe (4) aufweist.

5. Antriebsvorrichtung nach Anspruch 4, dadurch gekennzeichnet, daß das Differentialgetriebe ein Planetenradgetriebe (4) ist.

6. Antriebsvorrichtung nach zumindest einem der vorhergehenden Ansprüche 3 bis 5, dadurch gekennzeichnet, daß, bezogen auf eine Antriebswelle (8), ein Trägheitsmoment des Differentialgetriebes (4) einen kleinstmöglichen Wert aufweist.

7. Antriebsvorrichtung nach zumindest einem der vorhergehenden Ansprüche 3 bis 6, dadurch gekennzeichnet, daß zur Antriebsverbindung mit dem Pressenstößel (20) eine mit dem Differentialgetriebe (4) verbundene Kurbelwelle (10) vorgesehen ist.

8. Antriebsvorrichtung nach zumindest einem der vorhergehenden Ansprüche 3 bis 7, dadurch gekennzeichnet, daß während einer Umformphase (9) ein hohes Moment des Antriebes des Pressenstößels (20) durch eine Haltebremse (11) vorgesehen ist, die am Eingang des Differentialgetriebes (4), stromab einer Verbindung zu dem Zusatzantrieb (3), gegen ein Gestell (19) arbeitet.

9. Antriebsvorrichtung nach zumindest einem der vorhergehenden Ansprüche 3 bis 8, dadurch gekennzeichnet, daß der Zusatzantrieb (3) ein hydrostatischer Antrieb, insbesondere eine Hydromotor-Pumpen-Kombination, ist.

10. Antriebsvorrichtung nach zumindest einem der vorhergehenden Ansprüche 3 bis 8, dadurch gekennzeichnet, daß der Zusatzantrieb (3) ein Elektromotor ist.

11. Antriebsvorrichtung nach Anspruch 10, dadurch gekennzeichnet, daß der Elektromotor (3) über Transistorsteller geregelt oder mit einem mechanischen Stellgetriebe ausgerüstet ist.

12. Antriebsvorrichtung nach zumindest einem der vorhergehenden Ansprüche 3 bis 11, dadurch gekennzeichnet, daß der Energiespeicher ein Energieversorgungssystem (20) des Pressenantriebes ist.

13. Antriebsvorrichtung nach zumindest einem der vorhergehenden Ansprüche 3 bis 11, dadurch gekennzeichnet, daß der Energiespeicher (6) als magnetisch-dynamischer Speicher oder Hydrospeicher ausgeführt ist.

14. Antriebsvorrichtung nach Anspruch 13 oder 14, dadurch gekennzeichnet, daß eine Mehrzahl von Energiespeichern (6, 20) vorgesehen, insbesondere in wahlweise einstellbarer Parallelschaltung vorgesehen sind.

15. Antriebsvorrichtung nach zumindest einem der vorhergehenden Ansprüche 3 bis 14, dadurch gekennzeichnet, daß eine Prozeßsteuereinrichtung (21) zur Rückführung der gespeicherten Energie aus dem Energiespeicher (6) über den Zusatzantrieb (3) zu dem Hauptantrieb (4) vorgesehen ist.

## Claims

1. A method of controlling a ram speed of a press ram of a metal-forming press, comprising the steps of superimposing a second drive energy from an auxiliary drive (3) on a first drive energy from a main drive (100) and driving the press ram (20) at a resultant speed, characterized in that for a positive acceleration of the press ram (20) the second drive energy is taken from an energy storage device (6, 20) and that for a negative acceleration of the press ram (20) energy is fed back into said energy storage device (6, 20).

2. A method according to claim 1, characterized in that moments at which the positive and the negative accelerations of the press ram (20) begin and end are selected freely via a crank angle (ϕK) of a drive of the press ram (20).

3. A driving device for a press ram of a metal-forming press comprising a main drive (100) and an auxiliary drive (3) for varying a speed characteristic of the press ram (20) in dependence upon a crank angle (ϕK) of said main drive (100), in particular for carrying out the method according to claim 1, characterized in that the auxiliary drive (3) is arranged between the main drive (100) and an energy storage device (6, 20).

4. A driving device according to claim 3, characterized in that the main drive (100) comprises a flywheel (2), which is driven by a motor (1), in combination with a differential gear (4).

5. A driving device according to claim 4, characterized in that the differential gear is a planetary gearing (4).

6. A driving device according to at least one of the preceding claims 3 to 5, characterized in that, with respect to a drive shaft (8), a moment of inertia of the differential gearing (4) has the smallest possible value.

7. A driving device according to at least one of the preceding claims 3 to 6, characterized in that for establishing a driving connection with the press ram (20) a crankshaft (10) is provided, which is connected to the differential gear (4).

8. A driving device according to at least one of the preceding claims 3 to 7, characterized in that, during a metal-forming phase (9), a high torque of the drive of the press ram (20) is provided by a brake (11) operating at the inlet of the differential gear (4), downstream of a connection to the auxiliary drive (3), against a frame (19).

9. A driving device according to at least one of the preceding claims 3 to 8, characterized in that the auxiliary drive (3) is a hydrostatic drive, especially a hydraulic motor/pump combination.

10. A driving device according to at least one of the preceding claims 3 to 8, characterized in that the auxiliary drive (3) is an electric motor.

11. A driving device according to claim 10, characterized in that the electric motor (3) is controlled via a transistor operator or provided with a mechnical actuating mechanism.

12. A driving device according to at least one of the preceding claims 3 to 11, characterized in that the energy storage device is an energy supply system (20) of the press drive.

13. A driving device according to at least one of the preceding claims 3 to 11, characterized in that the energy storage device (6) is implemented as a magnetic-dynamic storage device or as a hydraulic accumulator.

14. A driving device according to claim 13 or 14, characterized in that a plurality of energy storage devices (6, 20) are provided, especially in a parallel connection which can selectively be activated.

15. A driving device according to at least one of the preceding claims 3 to 14, characterized in that a process control means (21) is provided for returning the stored energy from the energy storage device (6) via the auxiliary drive (3) to the main drive (4).

## Revendications

1. Procédé de commande de la vitesse de coulisseau d'un coulisseau d'une presse de formage, dans lequel on superpose à une première énergie d'entraînement fournie par un entraînement principal (100) une seconde énergie d'entraînement fournie par un entraînement auxiliaire (3) et on entraîne le coulisseau de presse (20) avec une vitesse résultante, caractérisé en ce que pour une accélération positive du coulisseau de presse (20), on prélève la seconde énergie d'entraînement dans un accumulateur d'énergie (6, 20) et pour une accélération négative du coulisseau de presse (20), on renvoie de l'énergie dans l'accumulateur d'énergie (6, 20).

2. Procédé selon la revendication 1, caractérisé en ce qu'on choisit librement les moments pour le début et la fin d'une accélération positive et d'une accélération négative du coulisseau de presse (20) par l'intermédiaire d'un angle de vilebrequin (ϕK) d'un dispositif d'entraînement du coulisseau de presse (20).

3. Dispositif d'entraînement d'un coulisseau d'une presse de formage avec un entraînement principal (100) et un entraînement auxiliaire (3) pour faire varier une caractéristique de vitesse du coulisseau de presse (20) en fonction d'un angle de vilebrequin (ϕK) de l'entraînement principal (100), en particulier pour la mise en oeuvre du procédé selon la revendication 1, caractérisé en ce que l'entraînement auxiliaire (3) est disposé entre l'entraînement principal (100) et un accumulateur d'énergie (6, 20).

4. Dispositif d'entraînement selon la revendication 3, caractérisé en ce que l'entraînement principal (100) présente un volant d'inertie (2) entraîné par un moteur (1) en liaison avec un mécanisme différentiel (4).

5. Dispositif d'entraînement selon la revendication 4, caractérisé en ce que le mécanisme différentiel est un engrenage planétaire (4).

6. Dispositif d'entraînement selon au moins une des revendications 3 à 5, caractérisé en ce que par rapport à un arbre d'entraînement (8), un moment d'inertie du mécanisme différentiel (4) présente une valeur aussi petite que possible.

7. Dispositif d'entraînement selon au moins une des revendications 3 à 6, caractérisé en ce qu'un vilebrequin (10) lié au mécanisme différentiel (4) est prévu pour la liaison d'entraînement avec le coulisseau de presse (20).

8. Dispositif d'entraînement selon au moins une des revendications 3 à 7, caractérisé en ce que pendant une phase de formage (9), un moment élevé de l'entraînement du coulisseau de presse (20) est prévu par l'intermédiaire d'un frein d'arrêt (11) qui fonctionne à l'entrée du mécanisme différentiel (4), en aval d'une liaison avec l'entraînement auxiliaire (3), contre un bâti (19).

9. Dispositif d'entraînement selon au moins une des revendications 3 à 8, caractérisé en ce que l'entraînement auxiliaire (3) est un entraînement hydrostatique, en particulier une combinaison hydromoteur-pompe.

10. Dispositif d'entraînement selon au moins une des revendications 3 à 8, caractérisé en ce que l'entraînement auxiliaire (3) est un moteur électrique.

11. Dispositif d'entraînement selon la revendication 10, caractérisé en ce que le moteur électrique (3) est régulé par l'intermédiaire de commandes à transistors ou est équipé d'une commande de réglage mécanique.

12. Dispositif d'entraînement selon au moins une des revendications 3 à 11, caractérisé en ce que l'accumulateur d'énergie est un système d'alimentation en énergie (20) de l'entraînement de presse.

13. Dispositif d'entraînement selon au moins une des revendications 3 à 11, caractérisé en ce que l'accumulateur d'énergie (6) est réalisé sous forme d'accumulateur magnétodynamique ou d'accumulateur hydraulique.

14. Dispositif d'entraînement selon la revendication 13 ou 14, caractérisé en ce qu'il est prévu une pluralité d'accumulateurs d'énergie (6, 20), en particulier dans un montage en parallèle réglable à volonté.

15. Dispositif d'entraînement selon au moins une des revendications 3 à 14, caractérisé en ce qu'il est prévu un dispositif de commande de processus (21) pour ramener l'énergie accumulée dans l'accumulateur d'énergie (6) vers l'entraînement principal (100) via l'entraînement auxiliaire (3).
